# EUROPÄISCHE PATENTSCHRIFT

(11) **EP 2 257 459 B1**
(45) Veröffentlichungstag und Bekanntmachung des Hinweises auf die Patenterteilung: **23.07.2014**
(21) Anmeldenummer: 09728622.3
(22) Anmeldetag: 17.03.2009
(51) Int. Cl.: B62D 21/15

(54) **VORDERFEDERBOCK FÜR EINEN LASTKRAFTWAGEN**
FRONT SPRING BRACKET FOR A TRUCK
SUPPORT DE RESSORT AVANT POUR UN VÉHICULE UTILITAIRE

(30) Priorität: 02.04.2008 DE 102008016924
(43) Veröffentlichungstag der Anmeldung: 08.12.2010
(73) Patentinhaber: Daimler AG, 70327 Stuttgart (DE)
(72) Erfinder: BEUSS, Hartmut, 70734 Fellbach (DE); SONSALLA, Norbert, 73249 Wernau (DE); STOCKKLAUSNER, Wilhelm, 73207 Plochingen (DE)
(74) Vertreter: JENSEN & SON
(86) Internationale Anmeldenummer: PCT/EP2009/001971
(87) Internationale Veröffentlichungsnummer: WO 2009/121478

(56) Entgegenhaltungen:
- EP-A- 1 454 816
- EP-A- 1 676 769
- WO-A-2006/018721
- WO-A-2007/104413
- DE-A1- 19 603 954
- DE-A1-102004 018 052

## Beschreibung

Die Erfindung betrifft einen Vorderfederbock für einen Lastkraftwagen der im Oberbegriff des Patentanspruchs 1 angegebenen Art.

Derartige Vorderfederböcke sind aus dem Serienfahrzeugbau von Lastkraftwagen bekannt. Dabei ist ein derartiger Vorderfederbock üblicherweise am vorderen Ende eines Fahrzeugrahmens an dessen Unterseite befestigt und trägt beispielsweise Komponenten eines Unterfahrschutzes. Üblicherweise umfasst der Vorderfederbock dabei zwei Seitenteile, welche am jeweils zugehörigen Rahmenlängsträger des Fahrzeugrahmens befestigt, insbesondere angeschraubt, sind und welche üblicherweise über einen unterhalb des Fahrzeugrahmens verlaufenden Querträger miteinander verbunden sind.

Neben dem generellen Wunsch zur Reduzierung des Gesamtgewichts des Fahrzeugs, mit welcher eine Erhöhung der Nutzlast einhergeht, besteht bei Lastkraftwagen das zusätzliche Bedürfnis, die Vorderachslast entsprechend zu reduzieren.

Aus der EP 1454816 A2 ist eine Tragstruktur eines Kraftfahrzeugs aus einer Fronttragstruktur und einer Bodentragstruktur gemäß dem Oberbegriff von Anspruch 1 bekannt. Die vorderste Verstrebung der Fronttragstruktur wird von einem Querträger bzw. Stoßfänger gebildet. An dem Stoßfänger sind zwei Deformationskörper angebracht, die sich im Fall eines Frontalzusammenstoßes verformen. An den Deformationskörpern sind als Frontlängsträger zwei untere Frontlängsträger und zwei Y-förmige Frontlängsträger befestigt, an denen über weitere Querträger zur Montage von Motor und Karosserieteilen zwei äußere Frontlängsträger befestigt sind.

Aufgabe der vorliegenden Erfindung ist es daher, einen Vorderfederbock der eingangs genannten Art zu gestalten, welcher gewichtsgünstig ausgebildet ist.

Diese Aufgabe wird erfindungsgemäß durch einen Vorderfederbock mit den Merkmalen des Patentanspruchs 1 gelöst.

Um einen Vorderfederbock zu gestalten, welcher gewichtsgünstig ausgebildet ist, sind erfindungsgemäß zumindest Teile des Vorderfederbocks als Aluminium-Gussbauteile, bzw. Aluminiumlegierungs-Gussbauteile ausgebildet. Dieser hat insbesondere den Vorteil, dass Aluminium und somit auch eine entsprechende Aluminiumlegierung eine Dichte von beispielsweise etwa 2,71 kg/dm³ aufweist, während beispielsweise Gusseisen eine entsprechende Dichte von 7,25 kg/dm³ aufweist. Durch die Verwendung von Aluminium bzw. einer entsprechenden Aluminium-Gusslegierung lässt sich somit das Gewicht des Vorderfederbocks erheblich reduzieren, was nicht nur die transportierbare Nutzlast erhöht, sondern darüber hinaus in vorteilhafter Weise auch die Vorderachslast reduziert. Da der Vorderfederbock nämlich nahe der Vorderachse angeordnet ist, wirkt sich eine Reduzierung des Gewichts zumindest von Teilen des Vorderfederbocks besonders günstig auf die Vorderachslast aus.

In weiterer Ausgestaltung der Erfindung hat es sich dabei als besonders vorteilhaft gezeigt, wenn zumindest die Seitenteile des Vorderfederbocks als Aluminium-Gussteile ausgebildet sind. Gerade die Seitenteile bieten nämlich ein hohes Einsparpotential, so dass bei einem üblichen Vorderfederbock durch die Verwendung einer Aluminium-Gusslegierung im Bereich der Seitenteile beispielsweise eine Gewichtsersparnis von 38 kg erreicht werden kann, was etwa 50 % des Gewichts des Vorderfederbocks entspricht. Ein besonderer Vorteil ist dabei, dass bei der Ausgestaltung der Seitenteile durch eine Aluminium-Gusslegierung der bislang vorhandene Bauraum zumindest weitestgehend beibehalten werden kann. Zudem vorteilhaft ist es, dass mittels einer derartigen Aluminium-Gusslegierung besonders belastungsgerecht ausgebildet werden kann.

Schließlich hat es sich als vorteilhaft gezeigt, wenn auch der die Seitenteile miteinander verbindende Querträger aus einem Aluminiumwerkstoff hergestellt ist. Dabei wäre es beispielsweise auch denkbar, den Querträger als Strangpressprofil zu gestalten, um zusätzliche Einsparmöglichkeiten an Fahrzeuggewicht im Bereich des Vorderfederbocks zu realisieren.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine ausschnittsweise Perspektivansicht auf das vordere Ende eines Fahrzeugrahmens eines Lastkraftwagens, an welchem ein Vorderfederbock befestigt ist und jeweils ein einem entsprechenden Rahmenlängsträger des Fahrzeugrahmens zugeordnetes Seitenteil aufweist, wobei die beiden Seitenteile über einen Querträger miteinander verbunden sind, und wobei die Seitenteile des Vorderfederbocks als Aluminium-Gussbauteile ausgebildet sind; und in
- Fig. 2: eine Perspektivansicht auf eines der beiden Seitenteile des Vorderfederbocks gemäß Fig. 1, welches als Aluminium-Gussbauteil gestaltet ist.

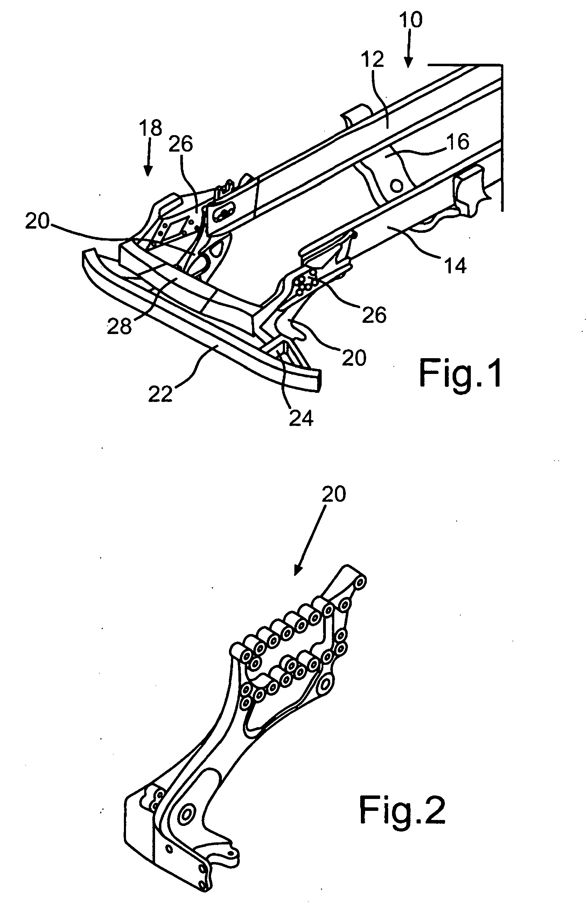

In Fig. 1 ist in einer ausschnittsweisen Perspektivansicht das vordere Ende eines Fahrzeugrahmens 10 eines Lastkraftwagens dargestellt. Der Fahrzeugrahmen 10 umfasst vorliegend zwei Rahmenlängsträger 12, 14, welche im Wesentlichen parallel zueinander in Fahrzeuglängsrichtung und horizontal verlaufen und über eine Mehrzahl von Querträgern 16 miteinander verbunden sind.

Am vorderen Ende des Fahrzeugrahmens 10 ist dabei ein Vorderfederbock 18 befestigt. Genauer gesagt, umfasst der Vorderfederbock 18 zwei Seitenteile 20, von welchen eines in Fig. 2 in einer Perspektivansicht dargestellt ist.

Der Vorderfederbock 18 bildet vorliegend einen Unterfahrschutz, und zwar mit Hilfe eines Querträgers 22, welcher mittelbar die beiden Seitenteile 20 miteinander verbindet. Im vorliegenden Fall erfolgt diese mittelbare Verbindung über jeweilige Deformationselemente 24, über welche der Querträger 22 am zugehörigen Seitenteil 20 nach hinten hin abgestützt ist.

Die Besonderheit des vorliegenden Vorderfederbocks 18 liegt nun darin, dass die Seitenteile 20 als Aluminium-Gussbauteile ausgebildet sind. Dies hat insbesondere den Vorteil, dass Aluminium eine Dichte von 2,71 kg/dm³ aufweist, und somit erheblich leichter ist als beispielsweise Gusseisen, aus welchen üblicherweise die Seitenteile 20 gestaltet sind und welches eine Dichte von 7,25 kg/dm³ aufweist. Hierdurch ergibt sich eine Gewichtsreduzierung des Vorderfederbocks 18 um ca. 50 % gegenüber einer Ausführung aus Gusseisen. Dabei wird vorliegend der vorhandene Bauraum zumindest im Wesentlichen beibehalten. Im speziellen Ausführungsbeispiel wird durch die Verwendung des Aluminiumwerkstoffs bzw. der Aluminium-Gusslegierung das Gewicht des Vorderfederbocks 18 um 38 kg reduziert. Da der Vorderfederbock 18 in der Nähe der Vorderachse positioniert ist, reduziert sich die Vorderachslast ebenfalls um etwa 38 kg, d.h. es kann insbesondere mehr Nutzlast transportiert werden.

Aus Fig. 1 ist schließlich erkennbar, dass außenseitig der Seitenteile 20 weitere jeweilige Seitenteile 26 angeordnet sind, welche über einen Querträger 28 miteinander verbunden sind. Während die Seitenteile 26 und der Querträger 28 im Wesentlichen auf Höhe des Fahrzeugrahmens 10 verlaufen, ist insbesondere der Querträger 22 des Vorderfederbocks 18 in einem erheblichen Abstand unterhalb des Querträgers 28 bzw. des Fahrzeugrahmens 10 angeordnet.

## Patentansprüche

1. Vorderfederbock (18) in einem Lastkraftwagen, welcher am vorderen Ende eines Fahrzeugrahmens (10) befestigt ist und jeweils ein einem jeweiligen Rahmenlängsträger (12, 14) des Fahrzeugrahmens (10) zugeordnetes Seitenteil (20) aufweist, welche über wenigstens einen Querträger (22) miteinander verbunden sind und bei dem zumindest die Seitenteile (20) des Vorderfederbocks (18) als Aluminium-Gussbauteile ausgebildet sind und der Querträger (22) aus einem Aluminiumwerkstoff hergestellt ist, wobei außenseitig der Seitenteile (20) weitere jeweilige Seitenteile (26) angeordnet sind, welche über einen Querträger (28) miteinander verbunden sind, und wobei die Seitenteile (26) und der Querträger (28) im Wesentlichen auf Höhe des Fahrzeugrahmens (10) verlaufen;
und wobei der Vorderfederbock (18) einen Unterfahrschutz bildet und zwar mit Hilfe eines Querträgers 22, indem der Querträger (22) des Vorderfederbocks (18) in einem erheblichen Abstand unterhalb des Querträgers (28) beziehungsweise des Fahrzeugrahmens (10) angeordnet ist, **dadurch gekennzeichnet, dass**
die Verbindung der Seitenteile (20) über den Querträger (22) mittels jeweiliger Deformationselemente (24) erfolgt, über welche der Querträger (22) am zugehörigen Seitenteil (20) nach hinten hin abgestützt ist.

## Claims

1. Front spring bracket (18) in a lorry, secured to the front end of a vehicle frame (10) and having a side part (20) each assigned to a respective frame side member (12, 14) of the vehicle frame (10), which side parts (20) are connected to one another via at least one crossmember (22), at least the side parts (20) of the front spring bracket (18) being designed as aluminium castings and the crossmember (22) being produced from an aluminium material, wherein outside of the side parts (20) there are arranged further respective side parts (26) which are connected to one another by a crossmember (28), and wherein the side parts (26) and the crossmember (28) extend substantially at the level of the vehicle frame (10), and wherein the front spring bracket (18) forms an under-run guard with the aid of a crossmember (22) by providing that the crossmember (22) of the front spring bracket (18) is located at a considerable distance below the crossmember (28) or the vehicle frame (10) respectively,
**characterised in that**
the connection of the side parts (20) via the crossmember (22) is established by means of respective deformation elements (24) via which the crossmember (22) is supported on the associated side part (20) in the rearward direction.

## Revendications

1. Support de ressort avant (18) pour un véhicule utilitaire, qui peut être fixé à l'extrémité avant d'un châssis (10) de véhicule et comporte des pièces latérales (20) qui sont associées à chaque longeron du châssis (12, 14) formant le châssis (10) de véhicule et qui sont reliées ensemble par au moins une traverse (22), au moins certaines des pièces latérales (20) du support de ressort avant (18) étant réalisées sous la forme de pièces moulées en fonte d'aluminium, et la traverse (22) est fabriquée en aluminium, à l'extérieur des pièces latérales (20) étant disposées d'autres pièces latérales (26), lesquelles sont reliées entre elles par une traverse (28), et les pièces latérales (26) et la traverse (28) s'étendant essentiellement à hauteur du châssis (10) de véhicule ; et le support de ressort avant (18) formant une protection anti-encastrement au moyen d'une traverse (22), la traverse (22) du support de ressort avant (18) étant disposée à une distance importante sous la traverse (28) ou sous le châssis (10) de véhicule, **caractérisé en ce que** la liaison des pièces latérales (20) au moyen de la traverse (22) est réalisée par des éléments de déformation (24) permettant à la traverse (22) de s'appuyer vers l'arrière sur chaque pièce latérale (20) associée.
